# EUROPEAN PATENT SPECIFICATION

(11) **EP 3 221 527 B1**
(45) Date of publication and mention of the grant of the patent: **08.07.2020**
(21) Application number: 15813273.8
(22) Date of filing: 18.11.2015
(51) Int. Cl.: E04B 7/22

(54) **PRECAST INSULATED LOAD BEARING ROOF ELEMENT AND METHODS OF MANUFACTURING A ROOF ELEMENT**
VORGEFERTIGTES, ISOLIERTES LASTTRAGENDES DACHELEMENT UND HERSTELLUNGSMETHODE FÜR EIN SOLCHES DACHELEMENT
ÉLÉMENT DE TOIT PORTEUR ISOLÉS PRÉFABRIQUÉ ET PROCÉDÉ DE FABRICATION D'UN ÉLÉMENT DE TOIT

(30) Priority: 18.11.2014 EP 14193680; 22.06.2015 DK 201500361
(43) Date of publication of application: 27.09.2017
(73) Proprietor: Theduffus V / David John Duffus, 2300 Copenhagen S (DK)
(72) Inventor: DUFFUS, David John, 2300 Copenhagen S (DK)
(74) Representative: Høiberg P/S
(86) International application number: PCT/EP2015/077027
(87) International publication number: WO 2016/079212

(56) References cited:
- WO-A2-2012/041330
- FR-A1- 2 355 137
- FR-A1- 2 660 345
- GB-A- 1 181 931

## Description

The present disclosure relates to a precast load bearing roof element for supporting a green roof of a building. The present disclosure further relates to a method for manufacturing a load bearing roof element as well as a method for installing a roof construction on a load bearing construction of a building.

### Background of invention

A green roof, roof garden, living roof or roof landscaping system is a roof of a building that is partially or completely covered with vegetation and a growing medium, planted over a waterproofing membrane. It may also include additional layers such as a root barrier and drainage and irrigation systems.

There are numerous benefits of green roof systems. Besides the aesthetic aspects they offer the potential to address climate change issues such as increased precipitation. Green roofs can help to reduce CO2 in the air, and subsequently global warming. They may also absorb rainwater and help lower urban air temperatures. Green roofs also capture more fine particles than a smooth standard roof and thus help cleaning the air. This is mainly because of the irregular structure of the surface. The more irregular the surface, the more fine particles are captured

The main disadvantages of green roofs are that they are technically complicated, labor-intensive and expensive to build and maintain - the initial costs of installing a green roof can be double that of a normal roof. The additional mass of the soil substrate and retained water places a large strain on the structural support of a building. There are also high demands on the waterproofing system of the structure, both because water may be retained on the roof and due to the possibility of roots penetrating the roof membrane and construction. Furthermore, welding of the membrane onsite can also be problematic.

When building a conventional green roof, an insulation layer is typically placed on top of the building structure, which is typically concrete. The insulation is placed on top of the concrete layer on the building. Cutting and attaching the insulation layer on the building is a complicated and time-consuming task. A waterproof membrane is then mechanically attached on top of the insulation layer. Sometimes there are several membranes. Cutting, fitting and attaching the membranes is complicated and time-consuming and there is a risk that the sometimes complex geometry can result in leaks. On top of the membranes there are typically several layers including filters, water retention trays and a barrier against mechanical rupture. On top of this is a light weight soil for the vegetation. An additional challenge for green roof constructions is related to efficient drainage during and after heavy raining.

GB 1181931 discloses a reinforced concrete element for roofs or flooring comprising a channel-shaped elongated lower part having side and end walls each being reinforced by metal rods and an upper part in the form of a flat concrete slab. A layer of heat insulating material is provided between the upper slab part and the side walls of the lower part.

### Summary of invention

The present invention is defined in the claims.

In a first embodiment the present disclosure relates to a precast load bearing roof element for a green roof of a building according to claim 1 comprising a load distributing concrete upper floor layer, a load bearing lower deck layer of concrete, a thermally insulating layer located between and separating the upper layer and the lower layer, and preferably a plurality of binders, preferably independent non-connected binders, extending between the lower deck layer and the upper layer. The roof element is preferably configured to be mounted on (and preferably span) a load bearing construction of the building.

This construction addresses the issues related to the difficulties, time and costs for building a green roof. By manufacturing entire load bearing roof elements, including an insulation layer, which can subsequently be mounted on a load bearing construction of a building, much of the work that takes places on the roof during building construction can be moved to the ground or to a factory. The insulation layer is built into the roof element and is sandwiched between two layers of concrete. Therefore the roof elements can be said to be self-insulating. The presently disclosed roof elements are strong and rigid enough to serve as platform for a green roof and can be transported in entire precast pieces that can be placed directly on a load bearing construction of a building. Load bearing in the context of the presently disclosed precast load bearing roof element refers to the roof element being able to resist the load of a green roof. Preferably, the roof element is capable of carrying the green roof including soil soaked with water, live load, precipitation, e.g. snow, the weight of the roof element itself and be able to span the distance between load bearing constructions of the building. In order to function as a green roof (or terrace) the upper floor layer must be able to carry the weight of precipitation (e.g. snow), soil, possibly soaked in water, and live load, i.e. people walking and jumping on the upper floor layer. The weight bearing requirements of a green roof is therefore substantially higher than for a normal roof. In one embodiment the presently disclosed roof element is therefore configured such that the upper floor layer of concrete can carry at least 500 kg/m², more preferably at least 600 kg/m², even more preferably least 700 kg/m², yet more preferably at least 800 kg/m², most preferably at least 900 kg/m².

The main purpose of the upper floor layer of concrete is distributing the load through the insulation layer to the lower deck layer, which is the load bearing part. The lower deck layer is therefore preferably reinforced with substantially horizontal steel reinforcement bars. The insulating layer separates the upper layer and lower layer, and the insulating layer is preferably made of a substantially rigid material as explained below and configured to transfer the load from the upper floor layer to the lower deck layer. The solution with an inner insulation layer and surrounding layers of concrete is also robust and relatively cheap to manufacture. The roof element comprises a plurality of binders extending between the lower layer and the upper layer. Preferably the binders are cast into the lower layer and upper layer, i.e. upper floor layer and lower deck layer. In one embodiment the binders comprise at least one slanted steel rod. Slanted in this context can be understood as the at least one binder extending both in a vertical direction between the upper layer and the lower layer and in a horizontal direction. This has several advantages; it prevents sideways movement of the upper layer in relation to the lower layer and at the same it limits the thermal bridge between the upper and lower layer since the fact that the binders extend also in the horizontal direction makes the path between the lower and upper layers of concrete longer than if the binders would only extend in the vertical direction.

The binders may be slanted rods of steel, stainless steel or galvanized steel or other suitable materials. Preferably, the slanted steel rods do not carry any vertical load of the upper layer of concrete. The binders are therefore preferably independent, e.g. they are not connected to each other, unlike e.g. latticeworks which are interconnected lattices. The binders of the present disclosure are configured to prevent sideways movement of the upper layer and preferably flexes slightly downwards when exposed to additional load from the upper layer.

In one embodiment, the plurality of binders extend through the at least one thermally insulating layer, preferably limiting the thermal bridge to the contact between the layers of concrete and the binders. The binders are relatively thin and therefore the thermal bridge between the upper and lower layers of concrete is negligible or substantially negligible.

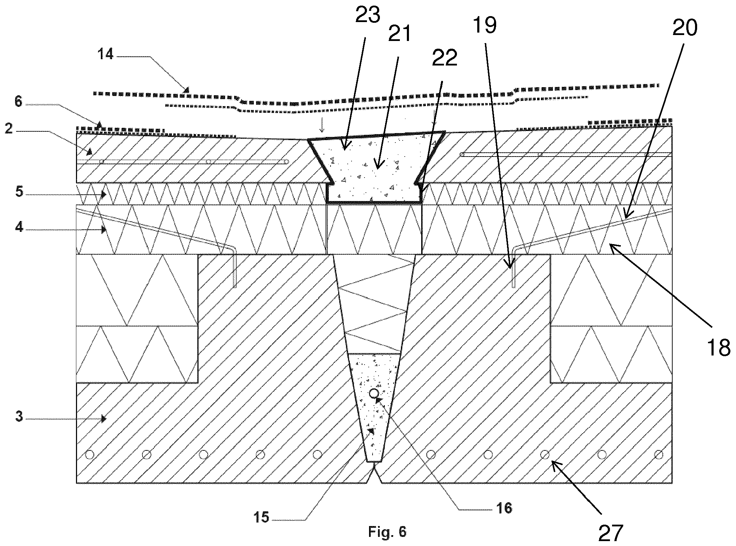

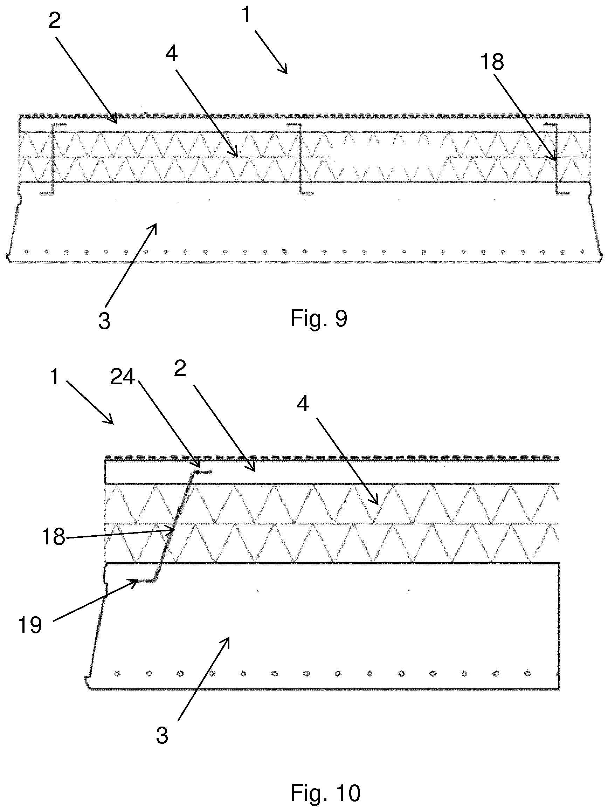

In one embodiment, the lower layer of concrete is pre-tensioned concrete. Preferably, the lower layer of concrete has embedded, substantially horizontal reinforcement bars as shown in e.g. fig. 6 (reinforcement steel bars 27, steel reinforcement bars also shown in e.g. figs. 9-14). The inventor has realized that by dimensioning lower deck layer of concrete appropriately and including reinforcement bars in the lower layer of concrete and combining it with binders, the deck is load bearing and at the same time thermally efficient, while it is also possible to manufacture and mount the element efficiently.

A further aspect of the present disclosure relates to the roof element having a waterproof membrane attached, possibly welded, on the upper surface of the upper floor layer of concrete. Attaching this membrane is a rather expensive and time-consuming process when performed on-site. It requires professionals to go to the building and bring tools and materials. In the present disclosure the membrane may be attached, for example welded, on the roof elements in a factory under more optimal manufacturing conditions. Furthermore the actual construction time for the building is shortened since the roof elements can be delivered in a state ready to be placed directly on a load bearing construction of a building.

Preferably, the insulating layer is made of a rigid and light material, such as polyisocyanurate (PIR), polyurethan (PUR) or expanded polystyrene (EPS). As an example, a layer of PIR may bear a weight of 2000 kg/m². Therefore, the insulating layer may bear the weight of the upper layer and above layers (upper layer of concrete, soil etc.) Various shapes of the layers are possible - in one embodiment the lower deck layer of concrete is load bearing and shaped as a rectangular container with five closed sides, wherein the upper side is open. The load bearing, steel reinforced lower deck layer of concrete may be cast around an inner volume of insulation, this inner volume of insulation thereby at least partly forming the lower deck layer.

The present disclosure also relates to a roof construction comprising a load bearing construction, such as a column and beam construction or simply load bearing walls of a building, and a number of the above-mentioned load bearing roof elements. The roof elements are positioned side by side, possibly forming a gap between the roof elements, in which concrete and/or autoclaved aerated concrete is filled. An additional waterproof membrane may be added to cover the gaps along with other elements to complete the roof for use as e.g. a green roof. In one embodiment, the roof construction comprises one precast load bearing roof element. Such a construction may form a terrace, for example an outdoor space adjacent to an apartment.

Another aspect of the disclosure relates to a method for manufacturing a load bearing roof element, in which the layers of the roof element are cast and assembled, and a waterproof membrane is attached, possibly welded, on the upper surface of the upper layer of concrete, such that the membrane covers at least the entire upper surface of the roof element. The advantage of this method is that all steps can be performed on the ground instead of on-site, possibly in a factory, and a roof element is obtained, which can be lifted and placed side by side with other load bearing roof elements directly on a load bearing construction of a building as it is.

### Description of drawings

The invention will in the following be described in greater detail with reference to the drawings. The drawings are exemplary and are intended to illustrate some of the features of the present method and unit and are not to be construed as limiting to the presently disclosed invention as defined by the appended claims.

### Prior art

Fig. 1a shows a cross section of a prior art green roof solution with screed and insulating layer on top of a concrete deck.
Fig. 1b shows a cross section of the whole green roof solution of fig. 1a.
Fig. 2 shows an alternative typical prior art solution of a concrete hollow core deck.

### Various embodiments of the present disclosure

Fig. 3a shows a cross section of a load bearing roof element mounted on a load bearing construction.
Fig. 3b shows a cross section of the whole load bearing roof element of fig. 3a.
Fig. 4a shows a load bearing roof element with a visible second portion of a thermally insulating layer for forming the slope of the roof element comprising a rigid and light material.
Fig. 4b shows the load bearing roof element of fig. 4a with a waterproof membrane attached to the upper surface of the upper layer.
Fig. 4c shows a cross section of the load bearing roof element of fig. 4b with a first portion of a thermally insulating layer comprising building insulation material, and a second portion of a thermally insulating layer comprising a rigid and light material.
Fig. 5a shows a roof construction comprising a load bearing construction and four load bearing roof elements.
Fig. 5b shows the roof construction of fig. 5a with additional waterproof membranes overlapping two neighboring roof elements, thereby covering the gap between the roof elements, and additional insulation elements (7).
Fig. 5c shows the roof construction of figs. 5a and 5b with a layer of membrane 8covering the additional insulation elements.
Fig. 6 shows a cross section of two neighboring roof elements of a roof construction with a gap between the elements filled with concrete and autoclaved aerated concrete, the roof elements of the roof construction having binders configured to stabilize the upper layer of concrete roof sideways.
Fig. 7 shows the lower layer of a load bearing roof element shaped as a rectangular container.
Fig. 8a shows a first portion of a thermally insulating layer and binders configured to stabilize the upper layer roof element sideways in relation to the lower layer of concrete.
Fig. 8b shows the first portion of a thermally insulating layer and binders of fig. 8a and a second layer of the first portion of a thermally insulating layer comprising a rigid and light material
Fig. 8c shows the second portion and binders of fig. 8b with a second portion of a thermally insulation layer comprising a rigid and light material..
Fig. 8d shows the roof element of figs. 8a-c having an upper layer of concrete.
Fig. 9 shows a cross section of another embodiment of a roof element having binders in the form of steel rods.
Fig. 10 shows a further embodiment of a roof element having a binder configured to stabilize the upper layer of the roof element sideways, the binder having a middle part extending both vertically (extending between the upper and lower layers of concrete) and horizontally.
Fig. 11 shows another embodiment having pairs of binders forming an X-like structure.
Fig. 12 shows a cross section another embodiment of a roof element.
Fig. 13 shows a further embodiment of the presently disclosed precast load bearing roof element.
Fig. 14 shows an embodiment of the presently disclosed roof construction having two roof elements placed side by side, forming a terrace/green roof.
Fig. 15 shows a cross section of two neighboring roof elements of a roof construction, the roof elements being bolted together with brackets.
Fig. 16 shows an embodiment of a roof element having brackets cast into the lower layer of concrete.

### Detailed description of the invention

One purpose of the present invention is to provide a robust, simple and cost efficient roof element for a building. The roof element may be a roof slab for a green roof. Therefore the presently disclosed invention relates to a precast load bearing roof element for a building comprising an upper layer of concrete, a lower layer of concrete, and at least one thermally insulating layer between the upper layer and the lower layer, the roof element configured to be mounted on a load bearing construction of the building. As stated this is also a solution that allows the roof elements to be manufactured in e.g. a factory rather than on-site.

In a preferred embodiment the roof elements have a substantially plane shape and/or a substantially plane upper surface of the upper layer. The roof elements are typically rectangular but may have other geometrical shapes to fit different types of load bearing constructions. In one embodiment, the roof element comprises a plurality of binders extending between the lower layer and the upper layer of concrete. Preferably the binders are cast into the lower layer and upper layer. In one embodiment, the binders comprise at least one slanted steel rod. Slanted in this context can be understood as the binders extending both in a vertical direction between the upper layer and the lower layer and in a horizontal direction. This has several advantages; it prevents sideways movement of the upper layer in relation to the lower layer and at the same time the geometry limits the thermal bridge between the upper and lower layer since the fact that the binders extend also in the horizontal direction makes the path between the lower and upper layers of concrete longer than if the binders would only extend in the vertical direction. The binders may be slanted rods of steel, stainless steel or galvanized steel or other suitable materials. A binder may be an element of metal which spans between two layers of concrete and binds the two layers together.

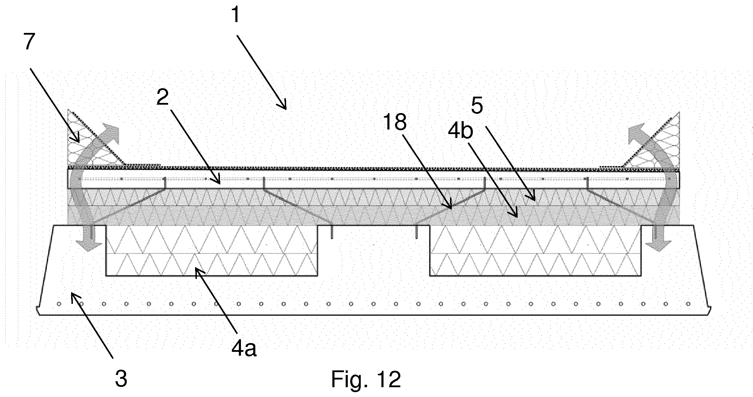

The binders may have a lower part, a middle part, and an upper part, wherein the lower and upper parts may be cast into the concrete layers. The binders have the task of stabilizing the upper layer of the roof element in relation to the lower layer of the roof element, preventing sideways movement of the layers in relation to each other. There are different possible configurations and shapes of the binders. In one embodiment, the lower and upper parts are substantially horizontal, whereas the middle part extends both in the vertical and horizontal direction. This embodiment is shown in fig. 10. The shape of the binder can be said to be that of a sloping 'Z'. In another embodiment, the lower and upper parts are substantially vertical, as shown in e.g. fig. 12.. In one embodiment the diameter of the at least one binder is at least 2 mm, or at least 3 mm, or at least 4 mm, or at least 5 mm, or at least 6 mm, or at least 7 mm, or at least 8 mm, or at least 9 mm, or at least 10 mm, or at least 15 mm, or at least 20 mm. The binder(s) may also be shaped as plates, wherein the cross section of the plate has the shapes as describes above i.e. either Z-shaped or having substantially vertically lower and upper parts and a middle parts extending both in the vertical and horizontal direction. Preferably, the upper and lower parts of the binders are cast into the precast load bearing roof element as part of the manufacturing. A reinforced steel net may be included, around which the top layer of concrete is poured, preferably placed on top of the at least one thermally insulation layer, connected to the binders.

The binders are preferably distributed substantially equally across the horizontal area of the roof element, preferably with some distance in the horizontal plane between the binders such that they are independent binders. The density of binders, i.e. the number of binders per area unit or length unit of the roof elements, is dependent on the dimensions of the upper layer of concrete and the strain between the upper layer of concrete and lower layer of concrete. In one embodiment, there are 2-5 binders/m², or 2-5 binders/m², or at least 2 binders/m², or at least 3 binders/m², or at least 4 binders/m², or at least 5 binders/m².

Preferably, the binders are independent i.e. not connected internally, thereby limiting the thermal bridge between the upper and lower layers of concrete. Independent non-connected binders ensure that the binders do not carry any weight

The lower layer of concrete is load bearing, whereas the upper layer of concrete may distribute the weight on the roof element to the lower layer of concrete.

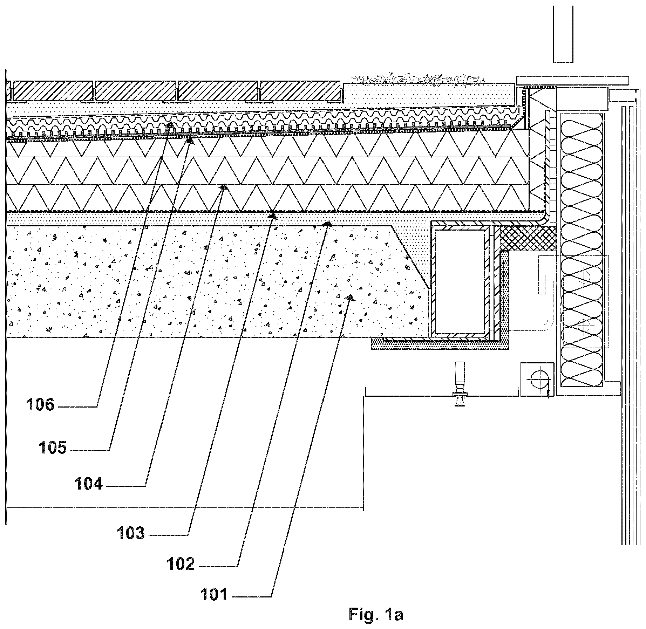

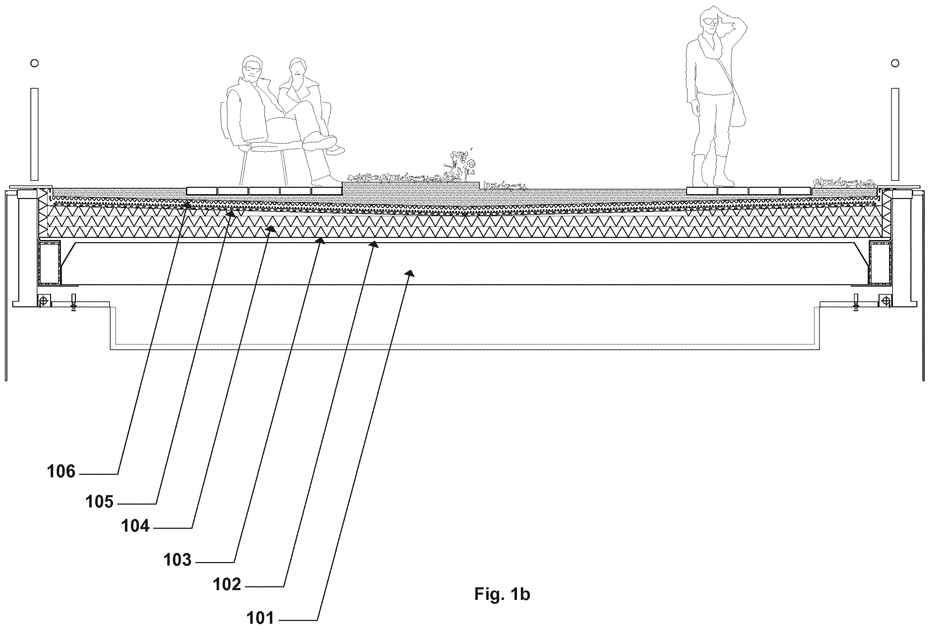

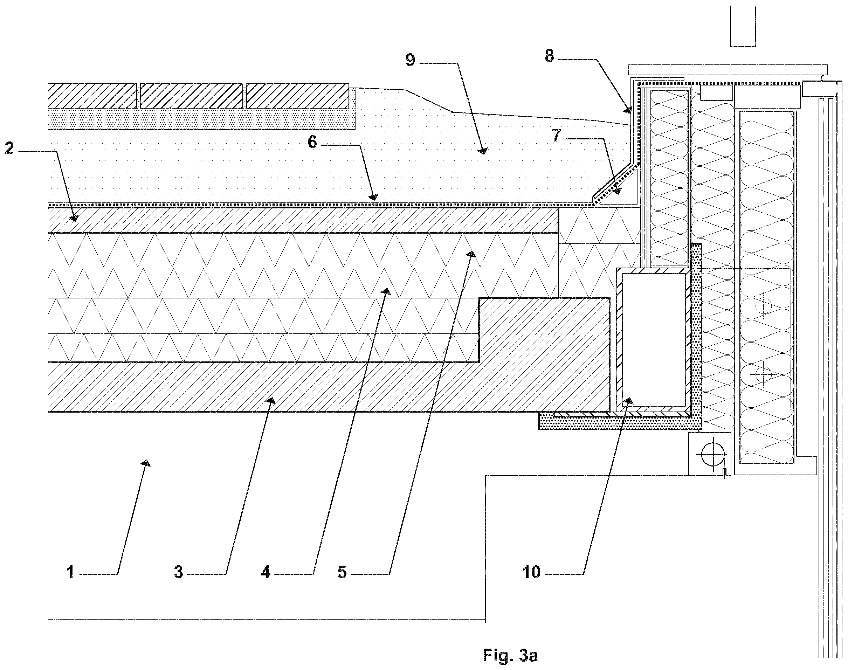

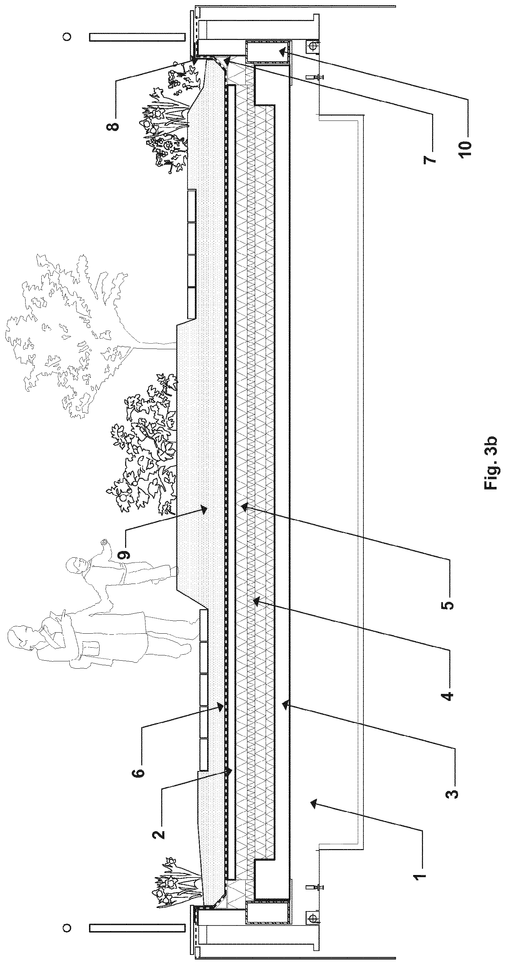

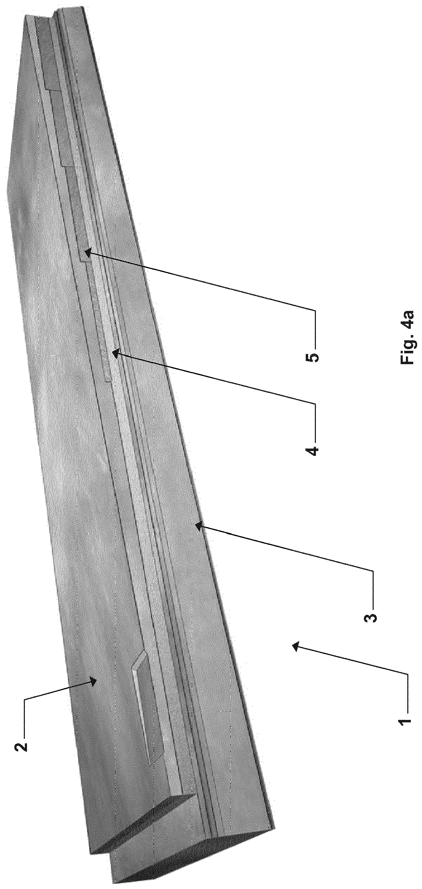

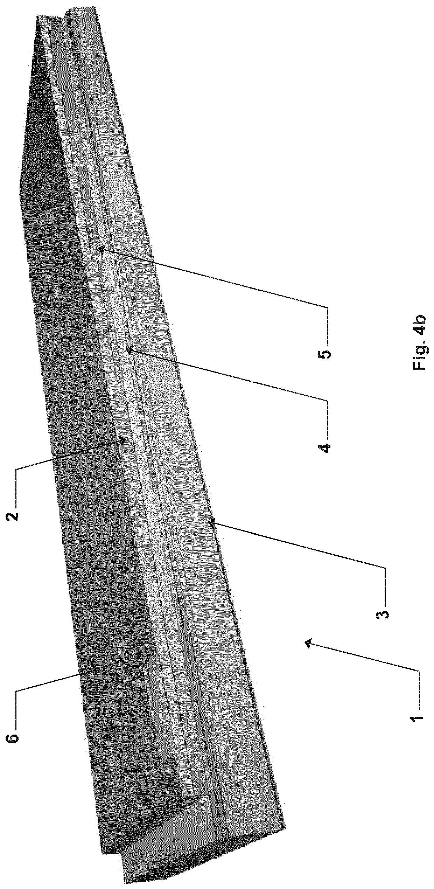

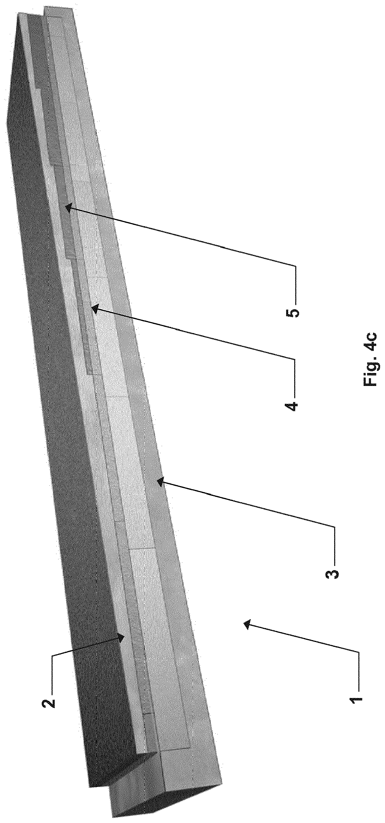

In existing green roof technology there is typically a lower layer of concrete, which is part of the building. Sometimes there is also a screed on top of the concrete, which can be described as a thin layer of concrete poured on-site on top of the structural concrete. On top of the screed there is then a layer of insulation and one or more membrane(s). Figure 1a and 1b show an example of a prior art green roof solution as described. In the present disclosure the roof elements can be delivered as entire pieces. Figure 3a, 3b, 4a, 4b, and 4c are examples of roof elements according to the present disclosure. Since the composite pieces of the present disclosure do not have to be assembled on-site, there are not only the advantages of manufacturing the roof elements in a more controlled environment; there are also better possibilities for testing the quality of the manufactured pieces, and thus reducing the risk of leakages. Because the insulation is incorporated into the deck element, and because the membrane is entirely welded to the top layer of concrete, the resulting deck element reduces work on the building site and reduces the possibility for human error, especially regarding the membrane's water proofing function.

The roof elements are typically, but not necessarily, mounted horizontally on a load bearing construction of the building, for example on a column and beam construction. A green roof may also be slightly sloped. Therefore, the roof elements of the present disclosure may also be mounted such that the roof element is sloped less than 10°, or less than 11 °, or less than 12°, or less than 13°, or less than 14°, or less than 15°, or less than 20°, or less than 25° in the longitudinal direction of the roof element in relation to a horizontal line.

A person skilled in the art will understand that the presently disclosed technology may have additional embodiments and that the technology may be practiced without the exact disclosure of all imaginable embodiments.

### Insulation layer

In one embodiment of the present disclosure the thermally insulating layer(s) separate(s) the upper layer of concrete from the lower layer of concrete to reduce the transfer of thermal energy between the two layers. In the typical use of the roof element the lower layer is exposed to room temperature and the upper layer is exposed to outdoor temperate i.e. varying temperature. Low thermal conductivity (k) materials reduce heat fluxes. Preferably, the thermally insulating(s) layer should have low thermal conductivity. Therefore, in one embodiment of the present disclosure one portion of the thermally insulating layer is selected from the group of polystyrene, polyisocyanurate (PIR), polyurethan (PUR), cellular glass, wood fiber and the like insulating materials with similar compressive strength. Other candidates for insulation material could be cellulose, glass wool, rock wool, urethane foam, vermiculite, perlite, plant fiber, recycled cotton denim, plant straw, and animal fiber. However, these would probably not have a suitable compressive strength for the purpose of carrying a green roof.

Another aspect of the present disclosure relates to at least one second portion of the thermally insulating layer(s) comprising a rigid and light material, such as autoclaved aerated concrete. The purpose of this rigid, light and thermally insulating layer is to reduce the impact of the weight of the upper layer and other layers on top of the upper layer on the insulation layer. Therefore, in one embodiment the second portion can be said to form a weight bearing connection between the upper and lower layers of concrete.

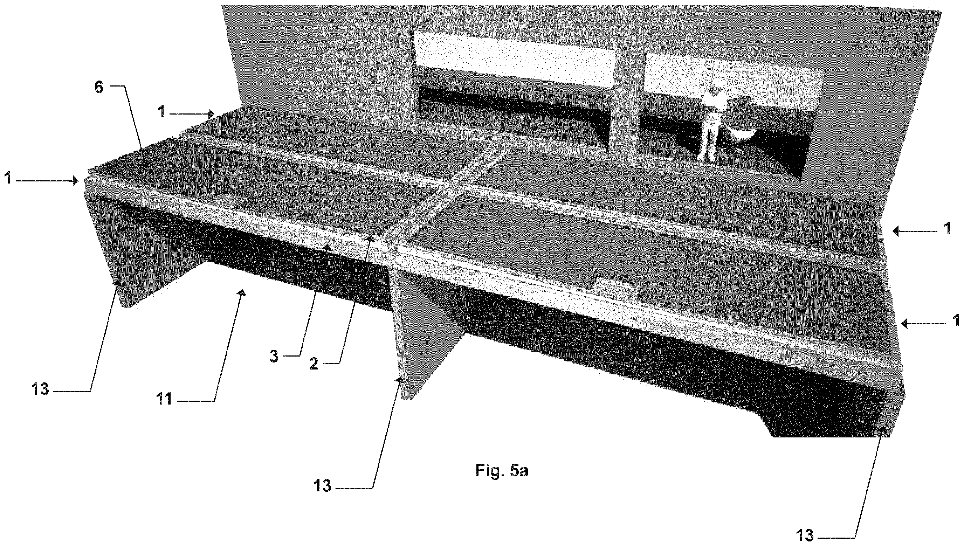

In one embodiment, the at least one thermally insulating layer comprises at least one second portion on top of the first portion comprising a rigid and light material such as polyisocyanurate (PIR) and polyurethan (PUR), the second portion configured to form a slope of the upper layer in relation to the lower layer. The second portion can form a stair-shaped slope of insulating material as shown in fig. 5a (second portion 5). Alternatively, the slope is formed by cutting the second portion of insulating material to a smoothly sloping area. The concrete floor upper layer and the lower deck layer form an inner volume there between. The inner volume is non-ventilated and preferably the inner volume is sealed such that that there is no connection of e.g. moisture from the outside. The thermally insulating layer fills this inner volume substantially, most preferably completely fills this inner volume between the upper floor layer and the lower deck layer. This is one way of creating a non-ventilated inner volume insulating layer between the upper floor layer and the lower deck layer that can carry the weight on a green roof, i.e. transfer the weight on top of the top floor layer to the load carrying lower deck layer.

### Shapes, sizes

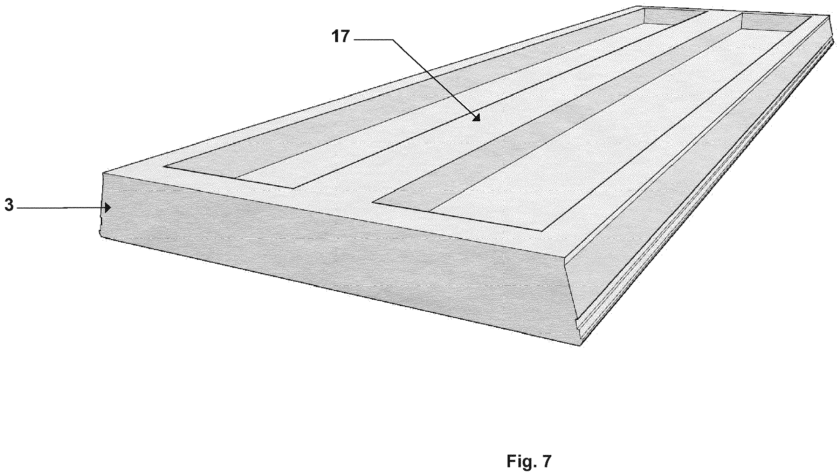

As stated the load bearing roof elements according to the present disclosure can be considered to constitute slabs or decks on top of the column and beam construction or load bearing walls. This means that the lower layer of concrete needs to be able to resist the vertical gravitational force of itself and the layers on top of it. At the same time the lower layer of concrete is preferably designed such that it reduces the thermal conductivity between the upper layer and the lower layer. In one embodiment the lower layer is load bearing and shaped as a rectangular container with five closed sides, and wherein the upper side is open. Fig. 7 shows an example of a lower layer according to the present layer shaped as a rectangular container with five closed sides, and wherein the upper side is open. The container in fig. 7 also has one inner wall of concrete. The thermally insulating layer preferably fills the inner volume of the lower layer shaped as rectangular container(s). This shape and configuration may be useful to provide thick insulation in some areas while a strong construction of the element is maintained. The container-shaped load bearing steel reinforced lower deck layer of concrete may, in the context of the presently disclosed roof element for green roofs, have the function that the load is carried by the upwardly extending edge portions (or middle portions) of the container while the interior mainly serves as thermal insulation, which also reduces the weight. A shape as shown in e.g. figs. 12-13 is efficient in terms of weight and substantially as load bearing as a design not having the recesses. In one embodiment, the thickness of the upwardly extending portions in fig. 12-13 is at least 250 mm, or at least 300 mm, while the thickness of the thinner middle portions are 100-200 mm, or 120-160 mm, such as 130 mm, or 140 mm or 150 mm. The upwardly extending portions may be referred to as compression zones - preferably the compression zones are configured to bear the load of the green roof in coordination with the reinforcing steel bars in the lower deck layer.

The thickness of the upper layer of concrete should be chosen such that it provides a good protection for the insulation layer from the layers above, e.g. soil, in terms of weight and moisture, and contributes to holding the roof element together. In one embodiment the thickness of the upper layer is in the range of 50 mm and 250 mm, such as in the range of 50 mm and 100 mm, or such as in the range of 100 mm and 150 mm, or such as in the range of 150 mm and 200 mm, or such as in the range of 150 mm and 250 mm, for example 50 mm, or 55 mm, or 60 mm, or 70 mm, or 80 mm, or 90 mm, or 100 mm, or 150 mm, or 200 mm, or 250 mm.

As stated the lower layer of concrete needs to be able to resist the vertical gravitational force of itself and the layers on top of it. In one embodiment the thickness of the lower layer is in the range of 50 mm and 250 mm, such as in the range of 50 mm and 100 mm, or such as in the range of 100 mm and 150 mm, or such as in the range of 150 mm and 200 mm, or such as in the range of 150 mm and 250 mm, for example 50 mm, or 55 mm, or 60 mm, or 70 mm, or 80 mm, or 90 mm, or 100 mm, or 150 mm, or 200 mm, or 250 mm, or 300 mm, or 400 mm, or 500 mm, or 600 mm. The thickness of the lower layer of concrete has a proportional relationship to the distance being spanned by the deck element. For example, a roof element of approximately 8.0 meters could have a lower layer of 300-400 mm depending on the load.

The thickness of the thermally insulating layer depends on a number of parameters, such as expected temperature differences between the upper and lower layer, how rigid the insulation layer itself is, properties and volume of a second rigid portion supporting the structure of the insulating layer etc. In one embodiment the thickness of the thermally insulating layer is in the range of 50 mm and 300 mm, such as in the range of 50 mm and 100 mm, or such as in the range of 100 mm and 150 mm, or such as in the range of 150 mm and 200 mm, or such as in the range of 200 mm and 300 mm, for example 50 mm, or 55 mm, or 60 mm, or 70 mm, or 80 mm, or 90 mm, or 100 mm, or 150 mm, or 200 mm, or 250 mm, or 300 mm, or 400 mm, or 500 mm, or 600 mm, or 700 mm, or 800 mm, or 900 mm.

The combined thickness of the upper layer, the lower layer and the at least one thermally insulating layer represents one of the roof elements outer dimensions. As one of the goals with the presently disclosed invention is that the roof elements should be easy to transport and mount, preferably the elements should not be too heavy. This also saves material. On the other hand, the roof elements should be robust and load bearing. In one embodiment the combined thickness of the upper layer, the lower layer and the at least one thermally insulating layer is in the range of 300 mm and 600 mm, such as in the range of 300 mm and 400 mm, or such as in the range of 400 mm and 500 mm, or such as in the range of 400 mm and 600 mm, or such as in the range of 300 mm and 350 mm, or such as in the range of 350 mm and 400 mm, or such as in the range of 400 mm and 450 mm, or such as in the range of 450 mm and 500 mm, for example 300 mm, or 310 mm, or 320 mm, or 330 mm, or 340 mm, or 350 mm, or 400 mm, or 450 mm, or 500 mm, or 550 mm, or 600 mm, or 700 mm, or 800 mm, or 900 mm, or 1000 mm.

The length of the roof element is a matter of how much weight and tension the layers support. A longer deck element, which only rests on an existing load bearing construction at the ends, is exposed to greater gravitational forces than a short deck element. Therefore, the length of the deck element has to be adapted to other choices that are made. In one embodiment the length of the roof element is in the range of 4 meters and 10 meters, such as in the range of 4 meters and 7 meters, or such as in the range of 5 meters and 10 meters, for example 4 meters, or 4.5 meters, or 5.0 meters or 5.5 meters, or 6.0 meters, or 7.0 meters, or 8.0 meters, or 9.0 meters, or 10.0 meters, or 11.0 meters, or 12.0 meters.

The width of the roof element is relatively open in the scope of the present disclosure. Preferably the width is limited to approximately 3.0 meters to avoid that the roof elements become ponderous to move. On the other hand, too narrow roof elements will require more connecting surfaces to seal on a roof construction including a number of roof elements. A narrow roof element will also require more lifts by crane. A typical standard width of ordinary roof elements is 1.2 meters. However a width of 2.4 meters is also standard and would also be possible. In one embodiment the width of the roof element is in the range of 0.5 meters and 3 meters, such as in the range of 0.5 meters and 1.5 meters, or such as in the range of 1.5 meters and 2.5 meters, or such as in the range of 2.5 meters and 3.0 meters, or such as in the range of 1.0 meters and 1.4 meters mm, or such as in the range of 2.4 meters and 2.8 meters, for example 0.5 meters, or 0.6 meters, or 0.7 meters or 0.8 meters, or 0.9 meters, or 1.0 meters, or 1.2 meters, or 1.4 meters, or 1.6 meters, or 2.0 meters, or 2.4 meters, or 2.8 meters, or 3.0 meters.

A further aspect of the present disclosure relates to the upper layer of the roof element being slightly convex exteriorly. For some buildings, climates and/or roof vegetation it may be good to have a slightly convex roof to lead away some of the rainwater that reaches the membrane. In one embodiment the height difference between the highest point and the lowest point of the outer surface of the convex upper layer is less than 100 mm, or less than 90 mm, or less than 80 mm, or less than 70 mm, or less than 60 mm, or less than 50 mm. An alternative to having an exteriorly convex upper layer of the roof element is to mount the element such that it has a slope of approximately between 1:40 and 1:80 (height difference: length) to ensure water movement towards a drain. The roof deck element may have an embedded drain as shown in e.g. figs 5a-c. The movement of water on the membrane can also be achieved by sloping the entire upper layer of concrete in relation to the lower layer of concrete. Slope can also be achieved by sloping the entire concrete element, so that one end of the element is higher than the other.

### Membrane

A further aspect of the present disclosure relates to the roof element having a waterproof membrane attached, possibly welded, on the upper surface of the upper layer. Attaching this membrane is a rather expensive and time-consuming process when performed on-site. The inventor has realized that by attaching the membrane to the roof element as part of the process of building the element, a safer, more robust and cheaper product can be achieved, because the membrane then becomes part of the presently disclosed precast roof element. Furthermore the actual construction time for the building may be shortened since the roof elements can be delivered in a state ready to be placed directly on a load bearing construction of a building. The membrane may cover the entire upper surface of the upper layer.

The membrane can be of one or several materials selected from the group of synthetic rubber and/or thermoplastic and/or modified bitumen, and/or polyurethane and/or metal, and/or roofing felt. Preferably the membrane of a roof element is seamless, meaning that it consists of only one piece of membrane. Where the concrete element is wider than a standard width of membrane, the membrane can be covered with two or more pieces, where one piece laps over the other at their meeting point/intersection. If desirable the membrane may also be configured to lead water away from the roof element and towards a drain.

If the roof element is used for a green roof there may be roots from the vegetation, which could puncture a conventional green roof construction and cause leaks and decay. The roof elements according to the present disclosure are generally more resistant against growing roots since the insulation layer is protected inside an upper and lower layer of concrete. However, a root repellant membrane further increases the resistance against growing roots. The roof element may further comprise an additional root repellent membrane for this purpose.

### Roof construction

A further aspect of the present disclosure relates to a roof construction comprising a load bearing construction, such as a column and beam construction or load bearing walls, and at least two of the above mentioned precast load bearing roof elements, wherein the roof elements are positioned side by side forming a gap between the roof elements, wherein the distance between the roof elements is between 0 mm and 100 mm, or between 1 mm and 100 mm, or between 1 mm and 10 mm, or between 1 mm and 20 mm, or between 1 mm and 30 mm, or between 1 mm and 40 mm, or between 1 mm and 50 mm, or between 0 mm and 10 mm, or between 0 mm and 20 mm, or between 0 mm and 30 mm, or between 0 mm and 40 mm, or between 0 mm and 50 mm. Such a roof takes advantage of the simplicity and robustness of the roof elements as described above.

The gaps between the roof elements may be filled with concrete and/or autoclaved aerated concrete, as shown in fig. 6. Preferably the concrete in the gaps is configured to resist diaphragm actions of the roof elements. There may be tension, compression and movements of the roof elements. The concrete is better suited for resisting these physical impacts than autoclaved aerated concrete; however, the autoclaved aerated concrete has better insulating properties and is lighter. The inventor has realized that by having a first layer of concrete in the gaps to stabilize the construction and a second layer of autoclaved aerated concrete to insulate the roof, the construction benefits from both materials.

The roof elements preferably have a waterproof membrane attached when delivered to the building site. However, the gaps between the roof elements have to be covered with additional strips of waterproof membrane to seal the whole roof construction. Therefore, the roof construction may further comprise additional waterproof membranes overlapping two neighboring roof elements, thereby covering the gap between the roof elements. In one embodiment of the present disclosure, the additional waterproof membrane is welded on the upper surfaces of the two neighboring roof elements. The additional waterproof membrane should be sufficiently wide to cover the gaps between the roof elements. The width of the additional waterproof membrane is in the range of 30 mm and 400 mm, such as in the range of 30 mm and 100 mm, or such as in the range of 100 mm and 200 mm, or such as in the range of 200 mm and 300 mm, or such as in the range of 300 mm and 400 mm, or such as in the range of 100 mm and 300 mm, for example 30 mm, or 40 mm, or 50 mm or 60 mm, or 70 mm, or 80mm, or 90mm, or 100 mm, or 120 mm, or 140 mm, or 160 mm, or 180 mm, or 200 mm, or 250 mm, or 300 mm, or 350 mm, or 400 mm.

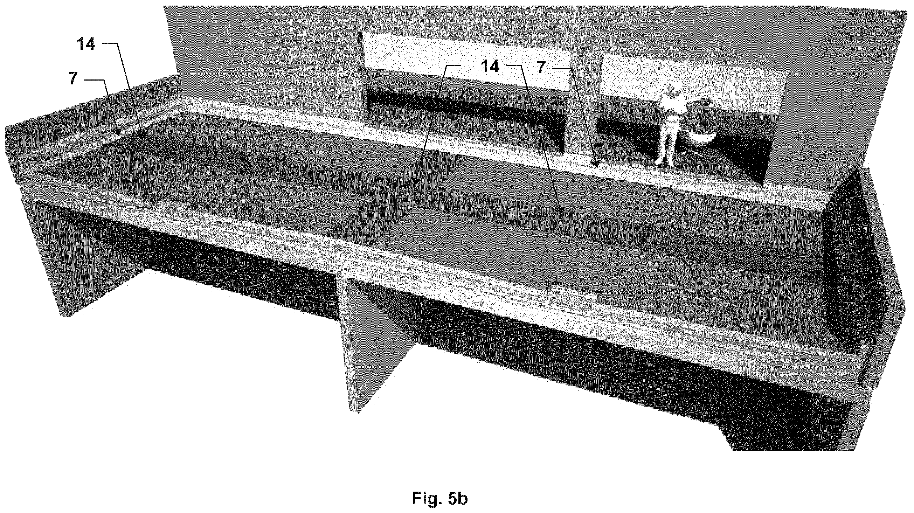

Since the thermally insulating layer(s) may comprise a rigid and light material, such as autoclaved aerated concrete, to reduce the impact of the weight of the upper layer and other layers on top of the upper layer on the insulation layer, there may be sections of the roof element that could be considered to be more exposed to thermal conductivity between the upper layer of concrete and the lower layer of concrete. One aspect of the present disclosure relates to the roof construction further comprising additional insulation elements on the upper side of the upper layer, wherein the additional insulation elements cover at least a part of the vertical extensions of the sections of concrete and/or autoclaved aerated concrete. The advantage of using additional insulation elements on the upper side of the upper layer of concrete in the present disclosure is that if some areas of the roof elements are less insulated than others, the additional insulation elements may compensate in these areas. Additional insulation elements (7) are shown in e.g. figs 5b and fig. 12. In fig. 12, the additional insulation elements have a cross section that is substantially triangular. In the example of fig. 12 it is shown how the additional insulation elements counteracts the thermal bridges on the edges of the roof element.

The thickness of the additional insulation elements is in the range of 50 mm and 200 mm, such as in the range of 50 mm and 100 mm, or such as in the range of 100 mm and 150 mm, or such as in the range of 150 mm and 200 mm, for example 50 mm, or 55 mm, or 60 mm or 65 mm, or 70 mm, or 80mm, or 90mm, or 100 mm, or 120 mm, or 140 mm, or 160 mm, or 180 mm, or 200 mm. In one embodiment the sides of the additional insulation towards the center of the roof elements are sloped. Examples of such additional insulation elements are shown in fig. 5b (additional insulation elements 7). The cross section of these elements may be substantially triangular. To protect the additional insulation elements against moisture and/or external physical/mechanical impact, and/or to protect the membrane, a layer of metal, for example steel, may be placed to cover the additional insulation elements.

### Methods for manufacturing and installation

The present invention addresses the issues related to the difficulties, time and costs for building a green roof. Besides the load bearing roof element itself, the present disclosure relates to a method for manufacturing a load bearing roof element, comprising the steps: casting a lower layer of concrete around an inner volume of insulation; adding a layer of thermally insulating material on the lower layer of concrete; casting a lower end of at least one binder into the lower layer of concrete; casting an upper layer of concrete on the layer of thermally insulating material and casting an upper end of the at least one binder into the upper layer of concrete; attaching a waterproof membrane on the upper surface of the upper layer of concrete, such that the membrane covers at least the entire upper surface of the roof element or the entire upper surface except strips of surface at the edges of the surface, such as strips having a width of less than 50 mm, or less than 100 mm, or less than 150 mm from the edges.

Another embodiment of the manufacturing method relates for manufacturing a load bearing roof element, comprising the steps of casting a lower deck layer of concrete around an inner volume of insulation and around a reinforcing steel bars, preferably pre-tensioned reinforcing steel bars; casting a lower end of a plurality of independent binders into the upper surface of the lower deck layer of concrete; adding a layer of thermally insulating material on the lower deck layer of concrete; casting an upper floor layer of concrete on the layer of thermally insulating material and casting an upper end of said binders into the lower surface of the upper floor layer of concrete; and attaching a waterproof membrane on the upper surface of the upper floor layer of concrete, such that the membrane covers at least the entire upper floor surface of the roof element, wherein the membrane is welded on the upper surface of the upper floor layer of concrete.

These processes can be performed in for example a factory rather than the constituent parts of the load bearing roof element being assembled on the roof, which is clearly an advantage. The process is simpler than the existing processes that are typically used for building a green roof, which requires that all of the steps are performed on-site, on the building. Attaching a membrane on the insulation in conventional green roof constructions is typically a complicated and time-consuming task. The inventor has realized that a simpler solution may be to weld the membrane on the upper surface of the upper layer of concrete of the roof element of the present invention. This can be performed as part of the manufacturing of the roof element and with standard sizes of the roof elements standard sizes of the membrane can also be used.

A further aspect of the disclosure relates to a method for installing a roof construction on a load bearing construction of a building, comprising the steps: manufacturing a number of thermally insulated load bearing roof elements according to the method described above; lifting the thermally insulated load bearing roof elements and placing them on the load bearing construction side by side, thereby forming gaps between the roof elements, wherein the distances between the roof elements are between 0 mm and 100 mm, or between 1 mm and 100 mm, or between 1 mm and 10 mm, or between 1 mm and 20 mm, or between 1 mm and 30 mm, or between 1 mm and 40 mm, or between 1 mm and 50 mm, or between 0 mm and 10 mm, or between 0 mm and 20 mm, or between 0 mm and 30 mm, or between 0 mm and 40 mm, or between 0 mm and 50 mm; filling the gaps with concrete and/or autoclaved aerated concrete. By using roof elements that come in pieces ready to be placed on the load bearing construction side by side, time can be saved on the building site.

After the roof elements have been placed on the load bearing construction and the gaps between the elements have been filled with concrete and/or autoclaved aerated concrete, additional waterproof membranes overlapping two neighboring roof elements may be welded, thereby covering the gap between the roof elements.

### Detailed description of drawings

Fig. 1a shows a cross section of a prior art green roof solution with screed and insulating layer on top of a concrete deck. A concrete roof element 101 is mounted on a load bearing construction of a building. On top of the concrete deck there is a screed 102 that has been poured on-site on top of the concrete. On top of the screed 102 there is a membrane 103, an insulating layer 104 and an additional two-layer membrane 105. Cutting, placing and attaching the membranes and insulating layer have to be done on-site in this solution. 106 refers to a water reservoir of the prior art green roof. Fig. 1b shows a cross section of the whole green roof solution of fig. 1a.

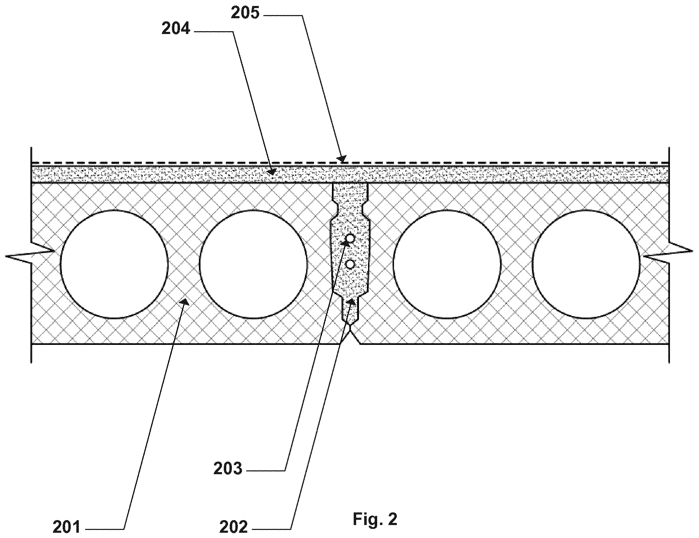

Fig. 2 shows an alternative prior art solution of a concrete deck. The solution comprises two slabs 201, wherein the gap between the slabs is filled with concrete 202. The gap also has steel reinforcements 203. On top of the insulating slabs 201 there is a screed 204 that has been poured on-site on top of the concrete, and a membrane 205.

Fig. 3a shows a cross section of a load bearing roof element 1 mounted on a load bearing construction. The roof element has an upper layer of concrete 2, a lower layer of concrete 3, with a first portion 4 of a thermally insulating layer comprising building insulation material, and a second portion 5 of a thermally insulating layer, and a waterproof membrane 6. The figure also shows an additional insulation element 7. The membrane 6 runs up the additional insulation element 7 and is tucked into a part of the load bearing construction. The additional insulation element 7 is covered by a layer of metal 8. The figure also shows the growing medium 9 (soil) of the green roof and the steel construction 10 of the load bearing construction. Fig. 3b shows a cross section of the whole load bearing roof element of fig. 3a with vegetation on the green roof.

Fig. 4a shows a load bearing roof element 1 with a second portion 5 of a thermally insulating layer for forming the slope of the roof element comprising a rigid and light material, an upper layer of concrete 2, a lower layer of concrete 3. Inside this roof element there is typically a first portion of a thermally insulating layer comprising building insulation material. Fig. 4b shows the load bearing roof element of fig. 4a with a waterproof membrane 6 attached on the upper surface of the upper layer. Fig. 4c shows a cross section of the load bearing roof element of fig. 4b with a first portion 4 of a thermally insulating layer comprising building insulation material, and a second portion 5 of a thermally insulating layer. In this figure the second portion 5 of rigid and light material forms the slope of the roof element The upper layer 2 may become slightly convex exteriorly due to camber changes.

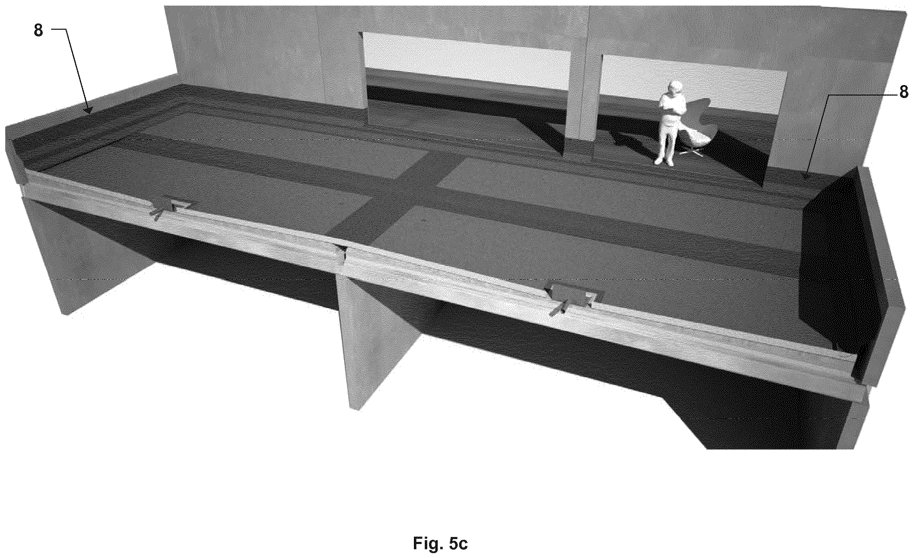

Fig. 5a shows a roof construction 11 comprising a load bearing construction and four load bearing roof elements, the roof construction 11, including additional insulation elements 7 (shown in fig. 5c). Each load bearing roof element has a visible upper layer of concrete 2, a lower layer of concrete 3, and a waterproof membrane 6. The roof construction in this example is a bearing wall construction having concrete walls 13. Fig. 5b shows the roof construction of fig. 5a with additional waterproof membranes 14 overlapping two neighboring roof elements, thereby covering the gap between the roof elements. This membrane may be welded on the roof elements. Fig. 5c shows the roof construction of fig. 5b with layers of membrane covering the membrane 6 that is welded to the deck elements and the additional insulation elements 7.

Fig. 6 shows a cross section of two neighboring roof elements 1 of a roof construction with a gap between the elements filled with concrete or autoclaved aerated concrete 15. Each roof element in this figure has an upper layer of concrete 2, a lower layer of concrete 3, a with a first portion 4 of a thermally insulating layer comprising building insulation material, and a second portion 5 of a thermally insulating layer, and a waterproof membrane 6. The autoclaved aerated concrete 15, which fills the gap between the roof elements 1 further comprises steel reinforcement 16. A binder 18 having a lower part 19 and a middle part 20 is cast into the lower layer of concrete 3 is configured to stabilize the upper layer of concrete sideways. There is an additional concrete element 21 (poured in place) between two neighboring upper layers 2 having an upper funnel shape portion 23 and a lower portion 22. The portions 22 and 23 together form a hook-like shape that hooks around the lower corners of the upper layers 2, thereby preventing the concrete element from being moved upwards in relation to the roof elements.

Fig. 7 shows the lower layer 3 of a load bearing roof element shaped as a rectangular container with five closed sides, and an open upper side such that two open cavities are formed. The container-shaped lower layer 3 has one inner wall 17 of concrete. A first layer of insulation will fill the two open cavities of roof element. During manufacture this lower layer 3 of concrete will actually be cast around a first layer of insulation, such that it is this first insulating layer that forms the cavities during manufacture.

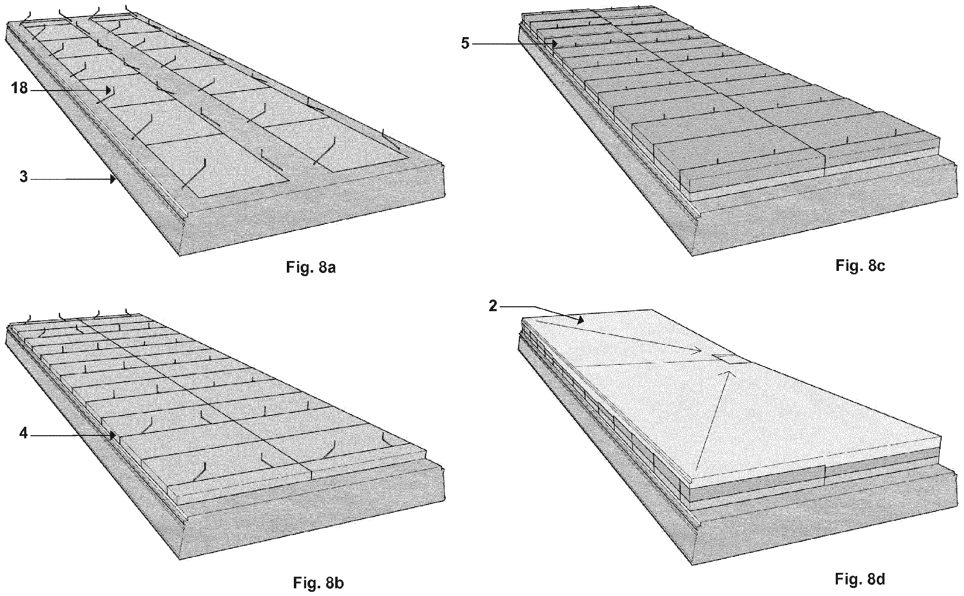

Fig. 8a shows a first portion 4 of a thermally insulating layer and binders 18 configured to stabilize the upper layer of concrete sideways. In fig. 8b the first portion 4 of a thermally insulating layer has a second layer of the first portion of a thermally insulating layer comprising a rigid and light material. In fig. 8c there is a second portion 5 of a thermally insulation layer comprising a rigid and light material configured to form a slope of the roof element. Fig. 8d shows the roof element of figs. 8a-c having an upper layer of concrete 2 and a lower layer of concrete 3 with the insulation layers (portions 4 and 5) and binders 18 of figs. 8a-c. The binders 18 prevent sideways movement of the upper layer 2 in relation to the lower layer 3.

Fig. 9 shows a cross section of a roof element 1 having an upper layer of concrete 2 and a lower layer of concrete 3, thermally insulating layer 4 and binders 18 in the form of steel rods.

Fig. 10 shows a further embodiment of a roof element 1 having an upper layer of concrete 2 and a lower layer of concrete 3, a thermally insulating layer 4 and a binder 18 in the form a steel rod. In this example, the binder 18 has a lower part 19 which is fastened to the lower layer of concrete and an upper part 24 which is fastened to the upper layer of concrete 24.

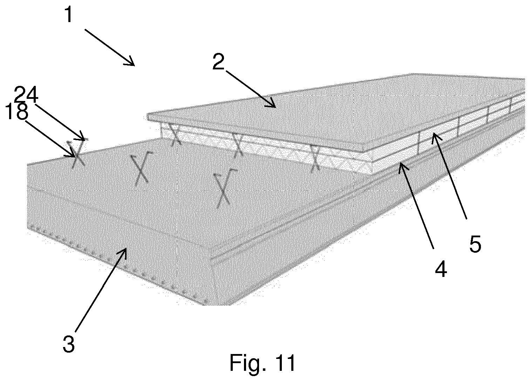

Fig. 11 shows a further embodiment of a roof element 1 having an upper layer of concrete 2 and a lower layer of concrete 3, a first portion of thermally insulating layer 4, a second portion of insulating layer 5, and a binder 18. In this embodiment pairs of binders form the shape of an X. The upper parts 24 of the binders are substantially horizontal.

Fig. 12 shows a further embodiment of a roof element 1 having an upper layer of concrete 2 and a lower container-shaped layer of concrete 3 (two internal containers in the longitudinal direction of the roof element), a first portion of thermally insulating layer 4 having one layer 4a in the container and a second layer 4b, and a second portion of insulating layer 5 comprising a rigid and light material such as PIR.

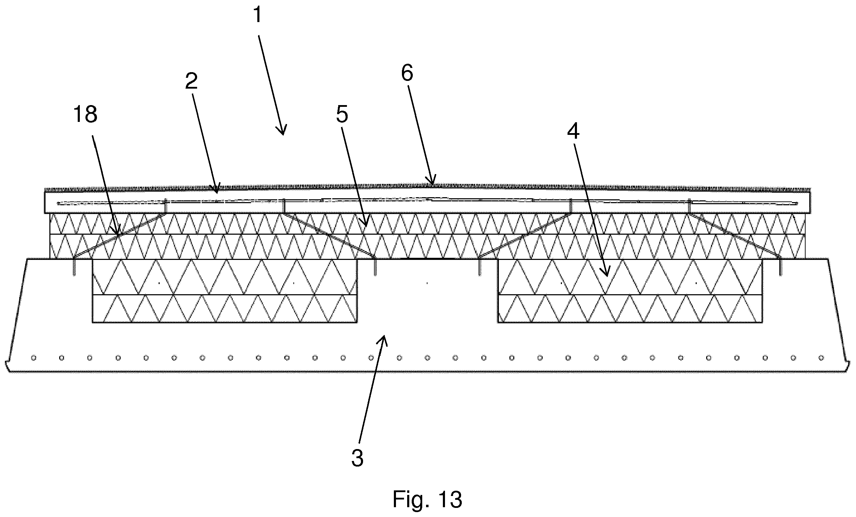

Fig. 13 shows a further embodiment of the presently disclosed precast load bearing roof element.

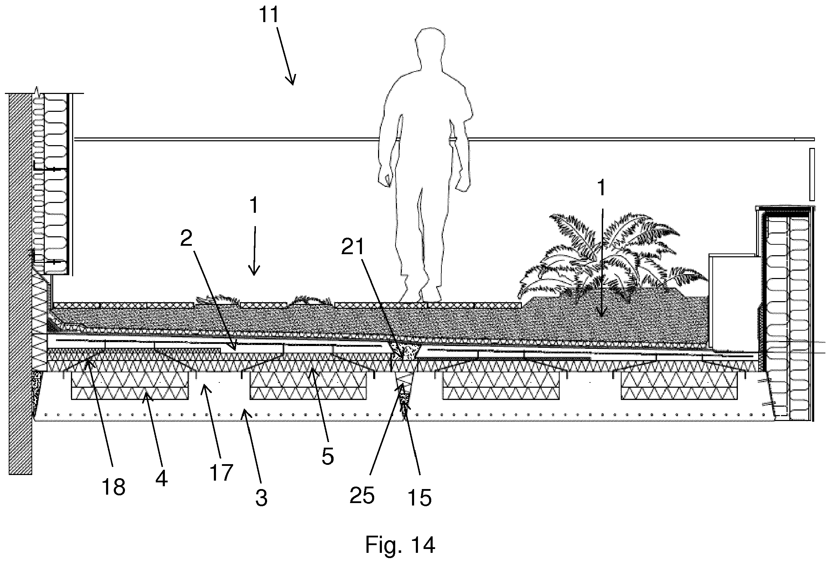

Fig. 14 shows a roof construction 11 having two roof elements 1, each roof element having an upper layer of concrete 2 and a lower layer of concrete 3, a first portion of thermally insulating layer 4, a second portion of insulating layer 5, and binders 18 to prevent sideways movement of the upper layer 2 in relation to the lower layer 3. The lower layer 3 is shaped as a rectangular container with five closed sides and an open upper side. In this example the container shaped lower layer 3 has one inner wall 17 of concrete in the longitudinal direction of the lower layer 3, dividing the container into two sub-containers. There is an additional concrete element 21 between two neighboring upper layers 2. The gap between the lower layers 3 of two neighboring elements is wedge-shaped, wherein a lower section of the wedge is filled with concrete 15 and an upper section of the wedge is filled with a thermally insulating layer 25. The roof elements have a plurality of binders 18 being cast into the lower layer 3 and the upper layer 2.

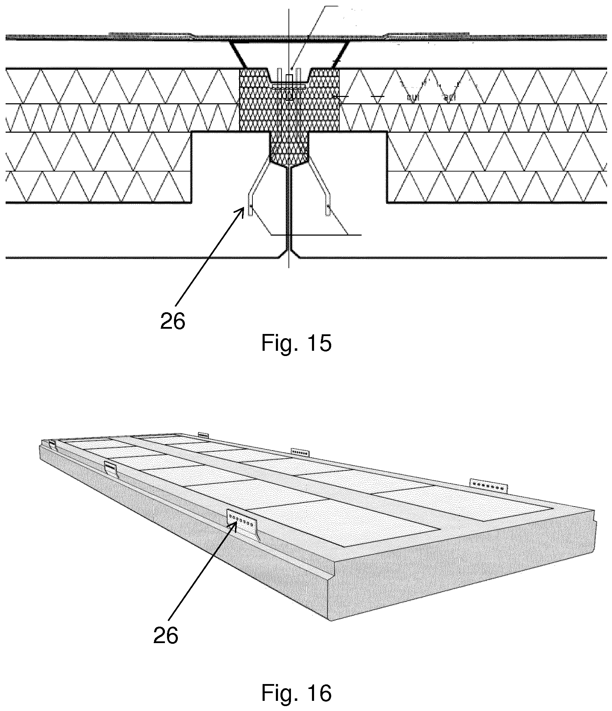

Fig. 15 shows a cross section of two neighboring roof elements 1 of a roof construction, the roof elements comprising brackets 26, preferably made of steel, cast into the roof elements. The brackets of the two roof elements are bolted together.

Fig. 16 shows one embodiment of a roof element having brackets 26 for bolting the roof element to another roof element. The bracket can also be used for lifting the roof element in cables and positioning it on a load bearing construction.

## Claims

1. A precast load bearing roof element (1) for a green roof of a building comprising:
- a concrete upper floor layer (2);
- a steel reinforced lower deck layer of concrete (3);
- a thermally insulating layer (4, 5) located between and separating the upper floor layer (2) and the lower deck layer (3); and
the roof element (1) configured to be mounted on and span a load bearing construction of the building,
wherein the concrete upper floor layer (2) is a load distributing concrete upper floor layer, wherein the steel reinforced lower deck layer (3) is a load bearing steel reinforced lower deck layer of concrete, and wherein a plurality of independent binders (1) extend between the lower deck layer (3) and the upper floor layer (2)
**characterized in that**
the thermally insulating layer (4, 5) substantially fills the inner volume formed between the upper floor layer (2) and the lower deck layer (3) such that the inner volume is a non-ventilated inner volume.

2. The roof element (1) according to claim 1, wherein the binders (18) are configured to prevent sideways movement of the upper floor layer (2) of concrete in relation to the lower deck layer (3) of concrete.

3. The roof element according to any of the preceding claims, the steel reinforced lower deck layer (3) of concrete being pre-tensioned concrete, and/or wherein
the lower deck layer (3) of concrete have embedded, substantially horizontal reinforcement steel bars.

4. The roof element (1) according to any of the preceding claims, wherein the substantially horizontal reinforcement steel bars are placed at least 40 mm from an underside of the lower deck layer (3).

5. The roof element (1) according to any of the preceding claims, wherein thermal conduction and/or a thermal bridge between the upper floor layer (2) and the lower deck layer (3) of concrete is limited to the binders (18) and/or wherein thermal conduction and/or a thermal bridge between the upper floor layer (2) and the lower deck layer (3) of concrete is substantially negligible.

6. The roof element (1) according to any of the preceding claims, the plurality of binders (18) extending through the thermally insulating layer (4, 5).

7. The roof element (1) according to any of the preceding claims, wherein the plurality of binders (18) are cast into the lower deck layer (3) and cast into the upper floor layer (2).

8. The roof element (1) according to any of the preceding claims, wherein the plurality of binders (18) are steel rods, stainless steel rods or galvanized steel rods.

9. The roof element (1) according to any of the preceding claims, wherein the lower deck layer (3) is load bearing and shaped as a rectangular container with five closed sides, and wherein the upper side is open, and wherein the thermally insulating layer fills the inner volume of the lower layer shaped as rectangular container.

10. The roof element (1) according to any of the preceding claims, further comprising a waterproof membrane (6) attached on the upper surface of the upper floor layer (2), covering the entire upper surface of the upper floor layer (2), wherein the membrane (6) is welded on the upper surface.

11. The roof element (1) according to any of the preceding claims, the roof element having a recess or impression for an embedded drain, the recess or impression preferably located in the upper floor layer (2).

12. The roof element (1) according to any of the preceding claims, wherein the upper floor layer (2) is slightly convex exteriorly and/or sloped in relation to the lower layer (3).

13. A roof construction (11) comprising a load bearing construction, such as a column and beam construction or load bearing walls, and at least two precast load bearing roof elements (1) according to any of claims 1-12, wherein each roof deck element (1) is spanning a load bearing construction and wherein the roof elements (1) are positioned side by side forming a gap between the roof elements, wherein the distance between the roof elements is between 0 mm and 100 mm, or between 1 mm and 100 mm.

14. A method for manufacturing a load bearing roof element (1) according to any of the preceding claims 1 to 12, comprising the steps:
- casting a lower deck layer (3) of concrete around an inner volume of insulation and around a reinforcing steel bars, preferably pre-tensioned reinforcing steel bars;
- casting a lower end of a plurality of independent binders (18) into the upper surface of the lower deck layer (3) of concrete;
- adding a layer of thermally insulating material (4,5) on the lower deck layer (3) of concrete;
- casting an upper floor layer (2) of concrete on the layer of thermally insulating material (4,5) and casting an upper end of said binders (18) into the lower surface of the upper floor layer (2) of concrete; and
- attaching a waterproof membrane (6) on the upper surface of the upper floor layer (2) of concrete, such that the membrane (6) covers at least the entire upper floor surface of the roof element (1), wherein the membrane (6) is welded on the upper surface of the upper floor layer (2) of concrete.

## Patentansprüche

1. Vorgefertigtes, lasttragendes Dachelement (1) für ein Gründach eines Gebäudes, Folgendes umfassend:
- eine obere Bodenschicht (2) aus Beton;
- eine stahlverstärkte, untere Dachterrassenschicht (3) aus Beton;
- eine Wärmeisolierschicht (4, 5), die sich zwischen der oberen Bodenschicht (2) und der unteren Dachterrassenschicht (3) befindet und diese voneinander trennt; und
wobei das Dachelement (1) dazu konfiguriert ist, auf einer lasttragenden Struktur des Gebäudes montiert zu werden und diese zu überbrücken,
wobei die obere Bodenschicht (2) aus Beton eine lastverteilende, obere Bodenschicht aus Beton ist, wobei die stahlverstärkte, untere Dachterrassenschicht (3) aus Beton eine lasttragende, stahlverstärkte, untere Dachterrassenschicht (3) aus Beton ist und wobei sich eine Vielzahl unabhängiger Bindemittel (1) zwischen der unteren Dachterrassenschicht (3) und der oberen Bodenschicht (2) erstreckt,
**dadurch gekennzeichnet, dass**
die Wärmeisolierschicht (4, 5) im Wesentlichen das innere Volumen füllt, das zwischen der oberen Bodenschicht (2) und der unteren Dachterrassenschicht (3) gebildet ist, sodass das innere Volumen ein nicht belüftetes inneres Volumen ist.

2. Dachelement (1) nach Anspruch 1, wobei die Bindemittel (18) dazu konfiguriert sind, laterale Bewegungen der oberen Bodenschicht (2) aus Beton in Bezug auf die untere Dachterrassenschicht (3) aus Beton zu verhindern.

3. Dachelement nach einem der vorhergehenden Ansprüche, wobei die stahlverstärkte, untere Dachterrassenschicht (3) aus Beton Spannbeton ist und/oder wobei die untere Dachterrassenschicht (3) aus Beton eingebettete, im Wesentlichen horizontale, verstärkende Stahlstangen aufweist.

4. Dachelement (1) nach einem der vorhergehenden Ansprüche, wobei die im Wesentlichen horizontalen, verstärkenden Stahlstangen mindestens 40 mm von einer Unterseite der unteren Dachterrassenschicht (3) platziert sind.

5. Dachelement (1) nach einem der vorhergehenden Ansprüche, wobei eine Wärmeleitung und/oder eine Wärmebrücke zwischen der oberen Bodenschicht (2) und der unteren Dachterrassenschicht (3) aus Beton auf die Bindemittel (18) beschränkt ist und/oder wobei eine Wärmeleitung und/oder eine Wärmebrücke zwischen der oberen Bodenschicht (2) und der unteren Dachterrassenschicht (3) aus Beton im Wesentlichen vernachlässigbar ist.

6. Dachelement (1) nach einem der vorhergehenden Ansprüche, wobei sich die Vielzahl von Bindemitteln (18) durch die Wärmeisolierschicht (4, 5) erstreckt.

7. Dachelement (1) nach einem der vorhergehenden Ansprüche, wobei die Vielzahl von Bindemitteln (18) in die untere Dachterrassenschicht (3) und in die obere Bodenschicht (2) eingegossen ist.

8. Dachelement (1) nach einem der vorhergehenden Ansprüche, wobei die Vielzahl von Bindemitteln (18) Stahlstäbe, Edelstahlstäbe oder verzinkte Stahlstäbe sind.

9. Dachelement (1) nach einem der vorhergehenden Ansprüche, wobei die untere Dachterrassenschicht (3) lasttragend und als rechtwinkliger Behälter mit fünf geschlossenen Seiten geformt ist und wobei die obere Seite offen ist und wobei die Wärmeisolierschicht das innere Volumen der unteren Schicht in Form eines rechtwinkligen Behälters füllt.

10. Dachelement (1) nach einem der vorhergehenden Ansprüche, ferner eine wasserdichte Membran (6) umfassend, die an der oberen Oberfläche der oberen Bodenschicht (2) angebracht ist, wobei sie die gesamte Oberfläche der oberen Bodenschicht (2) bedeckt, wobei die Membran (6) auf die obere Oberfläche aufgeschweißt ist.

11. Dachelement (1) nach einem der vorhergehenden Ansprüche, wobei das Dachelement eine Aussparung oder eine Vertiefung für einen eingebetteten Abfluss aufweist, wobei sich die Aussparung oder die Vertiefung vorzugsweise in der oberen Bodenschicht (2) befindet.

12. Dachelement (1) nach einem der vorhergehenden Ansprüche, wobei die obere Bodenschicht (2) äußerlich geringfügig gewölbt und/oder in Bezug auf die untere Schicht (3) geneigt ist.

13. Dachstruktur (11), eine lasttragende Struktur, wie beispielsweise eine Säulen- und Trägerstruktur oder lasttragende Wände, und mindestens zwei vorgefertigte, lasttragende Dachelemente (1) nach einem der Ansprüche 1-12 umfassend, wobei jedes Dachterrassenelement (1) eine lasttragende Struktur überbrückt und wobei die Dachelemente (1) Seite an Seite positioniert sind, sodass sie einen Spalt zwischen den Dachelementen bilden, wobei die Distanz zwischen den Dachelementen zwischen 0 mm und 100 mm oder zwischen 1 mm und 100 mm liegt.

14. Verfahren zum Herstellen eines lasttragenden Dachelements (1) nach einem der vorhergehenden Ansprüche 1 bis 12, die folgenden Schritte umfassend:
- Gießen einer unteren Dachterrassenschicht (3) aus Beton um ein inneres Volumen aus Isoliermaterial und um verstärkende Stahlstäbe, wobei diese vorzugsweise vorgespannte, verstärkende Stahlstäbe sind;
- Gießen eines unteren Endes einer Vielzahl von unabhängigen Bindemitteln (18) in die obere Oberfläche der unteren Dachterrassenschicht (3) aus Beton;
- Hinzufügen einer Schicht aus Wärmeisoliermaterial (4, 5) auf die untere Dachterrassenschicht (3) aus Beton;
- Gießen einer oberen Bodenschicht (2) aus Beton auf die Schicht aus Wärmeisoliermaterial (4, 5) und Gießen eines oberen Endes der Bindemittel (18) in die untere Oberfläche der oberen Bodenschicht (2) aus Beton; und
- Anbringen einer wasserdichten Membran (6) auf der oberen Oberfläche der oberen Bodenschicht (2) aus Beton, sodass die Membran (6) mindestens die gesamte obere Bodenoberfläche des Dachelements (1) abdeckt, wobei die Membran (6) auf die obere Oberfläche der oberen Bodenschicht (2) aus Beton aufgeschweißt ist.

## Revendications

1. Élément de toit porteur préfabriqué (1) pour un toit végétalisé d'un bâtiment comprenant :
- une couche de plancher supérieure en béton (2) ;
- une couche de terrasse inférieure en béton armé (3) ;
- une couche thermiquement isolante (4, 5) située entre et séparant la couche de plancher supérieure (2) et la couche de terrasse inférieure (3) ; et
l'élément de toit (1) conçu pour être monté sur et recouvrir une construction porteuse du bâtiment,
dans lequel la couche de plancher supérieure en béton (2) est une couche de plancher supérieure en béton à répartition de charge, dans lequel la couche de terrasse inférieure en béton armé (3) est une couche de terrasse inférieure porteuse en béton armé et dans lequel une pluralité d'éléments de liaison indépendants (1) s'étendent entre la couche de terrasse inférieure (3) et la couche de plancher supérieure (2) **caractérisé en ce que**
la couche thermiquement isolante (4, 5) remplit sensiblement le volume intérieur formé entre la couche de plancher supérieure (2) et la couche de terrasse inférieure (3) de sorte que le volume intérieur est un volume intérieur non ventilé.

2. Elément de toit (1) selon la revendication 1, dans lequel les éléments de liaison (18) sont conçus pour empêcher le mouvement latéral de la couche de plancher supérieure (2) en béton par rapport à la couche de terrasse inférieure (3) en béton.

3. Elément de toit selon l'une quelconque des revendications précédentes, la couche de terrasse inférieure (3) en béton armé étant en béton précontraint, et/ou dans lequel la couche de terrasse inférieure (3) en béton a des barres de renforcement en acier sensiblement horizontales intégrées.

4. Elément de toit (1) selon l'une quelconque des revendications précédentes, dans lequel les barres de renforcement en acier sensiblement horizontales sont placées à au moins 40 mm d'une face inférieure de la couche de terrasse inférieure (3).

5. Elément de toit (1) selon l'une quelconque des revendications précédentes, dans lequel une conduction thermique et/ou un pont thermique entre la couche de plancher supérieure (2) et la couche de terrasse inférieure (3) en béton est limité(e) aux éléments de liaison (18) et/ou dans lequel une conduction thermique et/ou un pont thermique entre la couche de plancher supérieure (2) et la couche de terrasse inférieure (3) en béton est sensiblement négligeable.

6. Élément de toit (1) selon l'une quelconque des revendications précédentes, la pluralité d'éléments de liaison (18) s'étendant à travers la couche thermiquement isolante (4, 5).

7. Elément de toit (1) selon l'une quelconque des revendications précédentes, dans lequel la pluralité d'éléments de liaison (18) sont coulés dans la couche de terrasse inférieure (3) et coulés dans la couche de plancher supérieure (2).

8. Élément de toit (1) selon l'une quelconque des revendications précédentes, dans lequel la pluralité d'éléments de liaison (18) sont des tiges en acier, des tiges en acier inoxydable ou des tiges en acier galvanisé.

9. Elément de toit (1) selon l'une quelconque des revendications précédentes, dans lequel la couche de terrasse inférieure (3) est porteuse et a la forme d'un conteneur rectangulaire à cinq côtés fermés, et dans lequel le côté supérieur est ouvert, et dans lequel la couche thermiquement isolante remplit le volume intérieur de la couche inférieure en forme de conteneur rectangulaire.

10. Élément de toit (1) selon l'une quelconque des revendications précédentes, comprenant en outre une membrane étanche (6) fixée sur la surface supérieure de la couche de plancher supérieure (2), recouvrant toute la surface supérieure de la couche de plancher supérieure (2), dans lequel la membrane (6) est soudée sur la surface supérieure.

11. Élément de toit (1) selon l'une quelconque des revendications précédentes, l'élément de toit ayant un enfoncement ou une empreinte pour un drain intégré, l'enfoncement ou l'empreinte étant de préférence situé(e) dans la couche de plancher supérieure (2).

12. Élément de toit (1) selon l'une quelconque des revendications précédentes, dans lequel la couche de plancher supérieure (2) est légèrement convexe à l'extérieur et/ou inclinée par rapport à la couche inférieure (3).

13. Construction de toit (11) comprenant une construction porteuse, telle qu'une construction de colonne et de poutre ou des murs porteurs, et au moins deux éléments de toit porteurs préfabriqués (1) selon l'une quelconque des revendications 1 à 12, dans laquelle chaque élément de terrasse de toit (1) recouvre une construction porteuse et dans laquelle les éléments de toit (1) sont positionnés côte à côte en formant un espace entre les éléments de toit, dans laquelle la distance entre les éléments de toit est comprise entre 0 mm et 100 mm, ou entre 1 mm et 100 mm.

14. Procédé de fabrication d'un élément de toit porteur (1) selon l'une quelconque des revendications 1 à 12 précédentes, comprenant les étapes suivantes :
- la coulée d'une couche de terrasse inférieure (3) en béton autour d'un volume intérieur d'isolant et autour de barres de renforcement en acier, de préférence des barres de renforcement en acier précontraintes ;
- la coulée d'une extrémité inférieure d'une pluralité d'éléments de liaison indépendants (18) dans la surface supérieure de la couche de terrasse inférieure (3) en béton ;
- l'ajout d'une couche de matériau thermiquement isolant (4, 5) sur la couche de terrasse inférieure (3) en béton ;
- la coulée d'une couche de plancher supérieure (2) en béton sur la couche de matériau thermiquement isolant (4, 5) et la coulée d'une extrémité supérieure desdits éléments de liaison (18) dans la surface inférieure de la couche de plancher supérieure (2) en béton ; et
- la fixation d'une membrane étanche (6) sur la surface supérieure de la couche de plancher supérieure (2) en béton, de sorte que la membrane (6) recouvre au moins toute la surface de plancher supérieure de l'élément de toit (1), dans lequel la membrane (6) est soudée sur la surface supérieure de la couche de plancher supérieure (2) en béton.
